# EUROPEAN PATENT APPLICATION

(11) **EP 4 582 464 A1**
(43) Date of publication of application: **09.07.2025**
(21) Application number: 23860816.0
(22) Date of filing: 28.08.2023
(51) Int. Cl.: C08G 59/28, C08G 59/40, C08G 59/50, C08J 11/06

(54) **REPROCESSABLE OR RECYCLABLE CURED LIQUID CRYSTALLINE EPOXY RESIN, RE-CURED PRODUCT THEREOF, AND METHOD FOR PRODUCING SAME**

(30) Priority: 30.08.2022 KR 20220108804
(71) Applicant: Kyungpook National University Industry-Academic Cooperation Foundation, Daegu 41566 (KR)
(72) Inventor: YEO, Hyeon Uk, Daegu 42803 (KR); TRINH, Thi En, Daegu 41568 (KR); DANG, Thu Loan, Daegu 41569 (KR); KU, Kyo Sun, Daegu 41544 (KR)
(74) Representative: Gulde & Partner
(86) International application number: PCT/KR2023/012722
(87) International publication number: WO 2024/049140

(57) **Abstract**

The present invention relates to a reprocessable or recyclable cured liquid crystal epoxy resin that can be reprocessed or recycled, a re-cured product thereof, and a method for producing same. More specifically, provided are: a cured liquid crystalline epoxy resin which is obtained by reacting an epoxy compound and in which a plurality of thermotropic liquid crystal materials are bound each other with a curing agent; a re-cured product thereof; and a method for producing same. The liquid crystalline epoxy resin cured material according to the present invention has excellent physical properties and thermal conductivity, can be reprocessed and recycled through eco-friendly processes while maintaining said properties, and thus can be used as an eco-friendly polymer material in various fields.

## Description

### Technical Field

The present invention relates to a cured product of liquid-crystalline epoxy resin that may be reprocessed or recycled, a re-cured product thereof, and a method for producing the same, and more specifically, to a cured product of liquid-crystalline epoxy resin that may be reprocessed or recycled, obtained by curing an epoxy compound, which has a plurality of thermotropic liquid crystal molecules bonded to each other, with a curing agent, a re-cured product thereof, and a method for producing the same.

### Background Art

As the annual production and use of plastics commonly used in daily life, such as thermosetting polymer resins, have steadily increased, the amount of waste plastics generated has also increased very rapidly. If waste plastics are landfilled, they can cause environmental pollution in the future because do not biodegrade, and if they are incinerated, they can release a large amount of hazardous substances into the atmosphere, causing new environmental pollution. In addition, the amount of plastic waste flowing into the ocean also tends to steadily increase. Due to these incorrect treatment methods for waste plastics, environmental problems that threaten the ecosystem are constantly emerging.

Currently, there are three main methods for recycling plastics: mechanical recycling, chemical recycling, and thermal recycling. Thermal recycling is a method of burning polymers to obtain energy, and it may be applied to all waste plastics and is relatively simple, but is the most avoided recycling method because it emits toxic gases, causing air pollution. Therefore, there is a need to develop polymer resins that may be mechanically recycled or chemically recycled rather than thermally recycled.

Mechanical recycling is a method that involves steps such as sorting and washing waste plastics and recycles the waste plastics into regenerated raw materials through thermal processing, and it is a relatively simple, environmentally friendly recycling method that does not cause air pollution. Among the types of plastics, thermosetting resins have excellent chemical resistance, mechanical strength, and structural integrity and thus are used as heat-dissipating resins and various composite material resins, but do not melt in heat and cannot be reprocessed, which greatly limits mechanical recycling of the resins.

Recently, a new polymer called vitrimer, which has the advantages of the above thermosetting resins and is also heat-processable, has been in the spotlight. These characteristics are realized by forming a network through dynamic crosslinking between polymer chains. For the reprocessing of vitrimer, organic or inorganic catalysts need to be used to promote chain transfer reactions for dynamic crosslinking. The use of such organic or inorganic catalysts can cause degradation of the polymer and corrosion of various process components in the recycling process. In addition, mechanical recycling enables recycling into only products of the same quality as the original product or products with a lower quality. For example, discarded PET bottles can only be recycled into identical PET bottles or into products of lower value than the PET bottles.

A plastic recycling method capable of overcoming these problems is chemical recycling. Chemical recycling is a recycling method that melts and decomposes waste plastics into monomers and small molecules and synthesizes them into new products, and it has a more complicated process than mechanical recycling, but is a recycling method that can create added value for waste plastics.

Accordingly, there is a need to develop polymer materials that may be recycled or reprocessed in an environmentally friendly manner.

### DISCLOSURE

### Technical Problem

An object of the present invention is to provide a polymer resin or a cured product thereof with excellent reprocessability or recyclability, and a method for producing the same.

### Technical Solution

The present invention provides a cured product of liquid-crystalline epoxy resin obtained by reacting a liquid-crystalline epoxy compound represented by Formula 1 below with a curing agent: 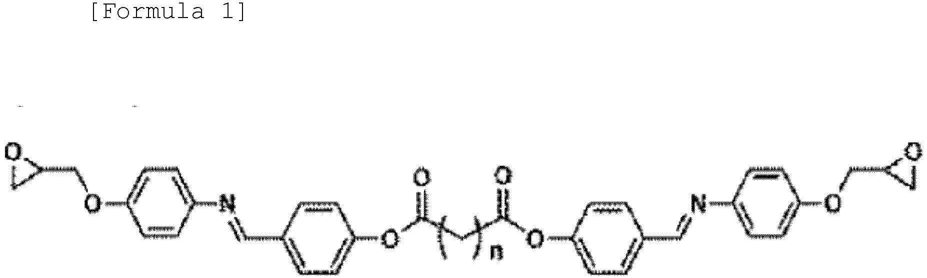 wherein n is an integer ranging from 1 to 30.

The cured product may be represented by Formula 2 below:

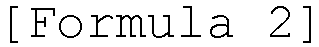

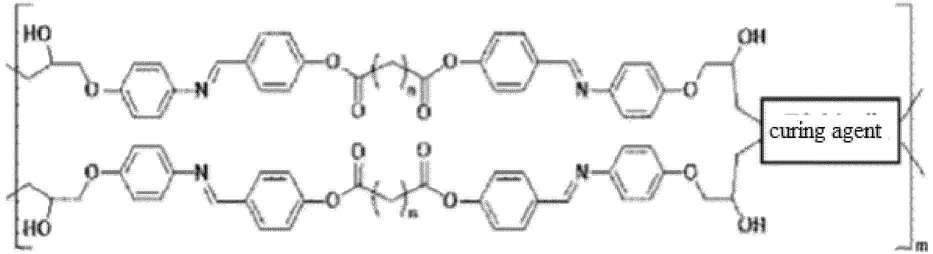

wherein n is an integer ranging from 1 to 30, and m is an integer ranging from to 100,000.

The curing agent may be selected from the group consisting of 4,4'-diaminodiphenylmethane (DDM), diaminodiphenylsulfone (DDS), m- phenylendiamine (mPDA), p-phenylendiamine (pPDA), hexamethylene diamine, oxydianiline, and dicyandiamide (DICY).

The compound and the curing agent may be reacted with each other at a molar ratio of 1: (0.1 to 1).

The cured product may have a high thermal conductivity of 0.5 W/m·K or higher.

The cured product may be recycled or reprocessed.

The cured product may be chemically decomposed under acidic or basic conditions and in a polar organic solvent.

The cured product may be decomposed into compounds represented by Formulas 3-1 and 3-2 below:

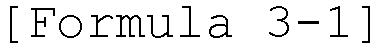

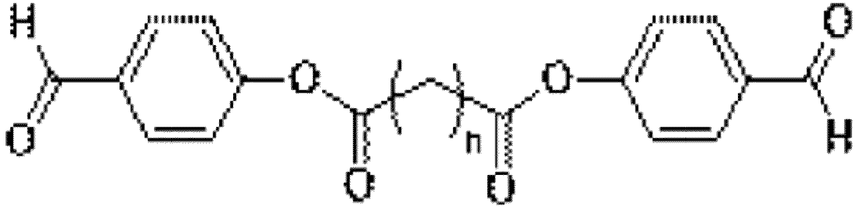

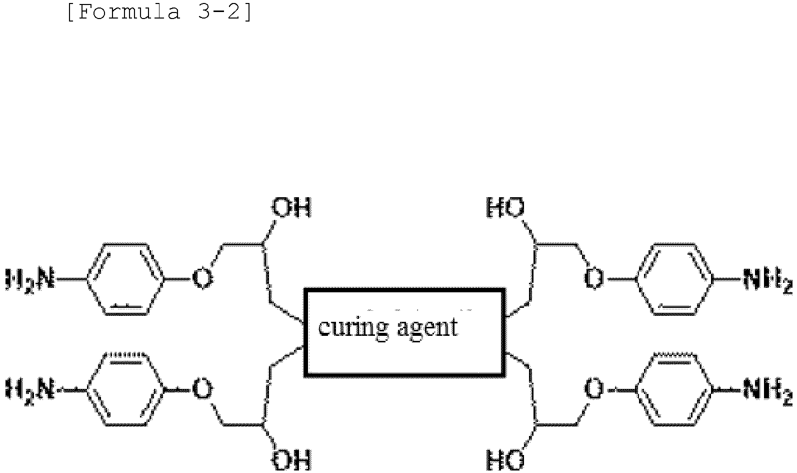

wherein n is an integer ranging from 1 to 30.

The present invention provides a re-cured product of liquid-crystalline epoxy resin obtained by re-curing compounds prepared by chemical decomposition of the cured product of liquid crystalline epoxy resin.

The re-cured product may be represented by Formula 4 below: 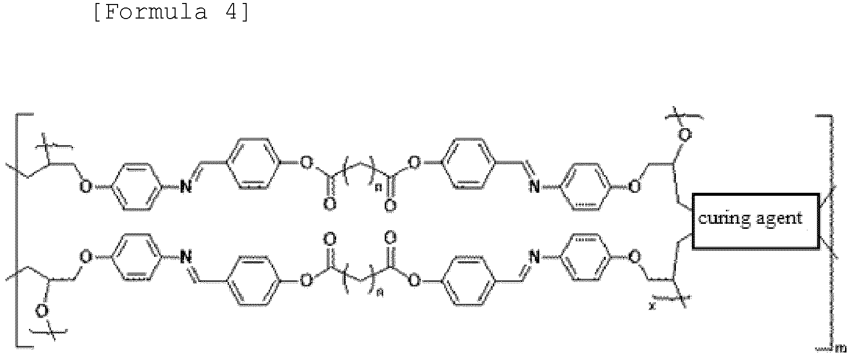 wherein n is an integer ranging from 1 to 30, and m is an integer ranging from 1 to 100,000.

The re-cured product may have improved mechanical properties compared to the cured product of liquid-crystalline epoxy resin.

The re-cured product may be recycled or reprocessed.

The present invention provides a vitrimer composition comprising the cured product of liquid-crystalline epoxy resin or the re-cured product of liquid-crystalline epoxy resin.

The present invention also provides a method for producing a cured product of liquid-crystalline epoxy resin, comprising a step of mixing a liquid-crystalline epoxy compound and a curing agent, followed by heating under pressure.

The curing agent may be selected from the group consisting of 4,4'-diaminodiphenylmethane (DDM), diaminodiphenylsulfone (DDS), m- phenylendiamine (mPDA), p-phenylendiamine (pPDA), hexamethylene diamine, oxydianiline, and dicyandiamide (DICY).

The compound and the curing agent may be mixed with each other at a molar ratio of 1: (0.1 to 1).

The heating may be performed at 120 to 140°C for 1 to 3 hours.

The present invention also provides a method for producing a re-cured product of liquid-crystalline epoxy resin, comprising a step of heating compounds, formed by chemical decomposition of the cured product of liquid-crystalline epoxy resin, under pressure.

The compounds formed by chemical decomposition may be prepared by grinding before the heating under pressure.

The heating may be performed at 180 to 200°C for 1 to 3 hours.

### Advantageous Effects

The cured product of liquid-crystalline epoxy resin according to the present invention has excellent physical properties and thermal conductivity, and may be reprocessed and recycled through an environmentally friendly process while maintaining these properties, so that it may be used as an environmentally friendly polymer material in various fields.

### Brief Description of Drawings

FIG. 1 schematically shows processes for producing an epoxy resin, a cured product thereof, a reprocessed product of a broken cured product thereof, a chemical decomposition product thereof, a re-cured product thereof, and a reprocessed product thereof according to embodiments of the present invention.
FIG. 2 shows the results of differential scanning calorimetry (DSC) of equivalent mixtures of liquid-crystalline epoxy compound (EP-n) and 4,4'-diaminodiphenylmethane (DDM) used in the production of cured products of epoxy resin according to one embodiment of the present invention. Here, (a) shows dynamic DSC curves at a heating rate of 5°C/min, and (b) shows isothermal DSC curves at 130°C.
FIG. 3 shows the results of isothermal differential scanning calorimetry analysis of the equivalent mixtures of EP-n and DDM at various temperatures.
FIG. 4 shows circular samples of epoxy resin cured products C-EP-n, which are C-EP-4, C-EP-6, and C-EP-8 from the left.
FIG. 5 shows the results of analyzing the thermal properties of the epoxy resin cured products C-EP-n. Here, (a) shows the results of differential scanning calorimetry (DSC), and (b) shows the results of thermogravimetric analysis (TGA).
FIG. 6 shows the results of dynamic mechanical analysis (DMA) of the epoxy resin cured products C-EP-n. Here, (a) is storage modulus (E'), (b) is loss modulus (E"), and (c) is tan δ value.
FIG. 7 shows polarizing microscope images for EP-n curing processes, measured at 130°C (scale bar = 50 µm).
FIG. 8 shows the results of X-ray diffraction (XRD) analysis of the epoxy resin cured products C-EP-n.
FIG. 9 is a process for producing a reprocessed product V-EP-n through reprocessing of a broken epoxy resin cured product C-EP-n according to another embodiment of the present invention.
FIG. 10 shows the results of dynamic mechanical analysis of the epoxy resin cured product C-EP-n and its reprocessed product V-EP-n according to FIG. 9. Here, the black line represents C-EP-8, and the red line represents V-EP-8.
FIG. 11 shows the results of solubility tests for the epoxy resin cured product C-EP-n. Here, (a) shows the results of a solubility test under various organic solvent conditions in a neutral state, (b) shows the decomposition behavior in each organic solvent under a 0.125 M HCl condition, (c) shows the decomposition behavior in aqueous THF solutions containing 0.125 M of various acids, and (d) shows the decomposition behavior in aqueous THF solutions containing various concentrations of HCl.
FIG. 12 shows the results of nuclear magnetic resonance (¹H-NMR) analysis of D-EP-n, which are chemical decomposition products of epoxy resin cured products (C-EP-n).
FIG. 13 shows the results of infrared spectroscopy (FT-IR) analysis of the chemical decomposition products D-EP-n.
FIG. 14 shows the results of gel permeation chromatography (GPC) measurement of the chemical decomposition products D-EP-n.
FIG. 15 shows the results of differential scanning calorimetry for the re-curing reaction of the chemical decomposition products D-EP-n. Here, (a) shows dynamic DSC curves at a heating rate of 5°C/min, and (b) shows isothermal DSC curves at 190°C.
FIG. 16 shows circular samples of the re-cured products R-EP-n, which are R-EP-4, R-EP-6, and R-EP-8 from the left.
FIG. 17 shows the results of analyzing the thermal properties of the re-cured products R-EP-n. Here, (a) shows the results of differential scanning calorimetry (DSC), and (b) shows the results of thermogravimetric analysis (TGA).
FIG. 18 shows the results of dynamic mechanical analysis (DMA) of the re-cured products R-EP-n. Here, (a) shows is storage modulus (E') (straight line), (b) shows loss modulus (E") (dotted line), and (c) shows tan δ value.
FIG. 19 shows the results of X-ray diffraction (XRD) analysis of the re-cured products R-EP-n.
FIG. 20 shows a process for producing a reprocessed product RV-EP-n through reprocessing of a broken re-cured product R-EP-n according to another embodiment of the present invention.
FIG. 21 shows the results of decomposition tests for the cured product R-EP-n. Here, (a) shows the solubility and decomposition results under various organic solvent conditions in a neutral state, (b) shows the decomposition behavior in each organic solvent under 0.5 M NaOH and room temperature conditions, and (c) shows the decomposition behavior after heating at 60°C for 5 hours under a 0.5 M NaOH condition.
FIG. 22 shows the NMR spectrum of D-EP-8, a decomposition product prepared from the re-cured product REP-8.
FIG. 23 shows the isothermal differential scanning calorimetry curve at 160°C of D-EP-8, a decomposition product prepared from the re-cured product R-EP-8.

### Best Mode

The terms used in the present specification are currently widely used general terms selected in consideration of their functions in the present invention, but they may change depending on the intents of those skilled in the art, precedents, or the advents of new technology. Additionally, in certain cases, there may be terms arbitrarily selected by the applicant, and in this case, their meanings will be described in a corresponding description part of the present invention. Accordingly, terms used in the present invention should be defined based on the meaning of the term and the entire contents of the present invention, rather than the simple term name.

Unless otherwise defined, all terms used herein, including technical or scientific terms, have the same meanings as understood by those skilled in the art to which the present disclosure pertains. Terms such as those used in general and defined in dictionaries should be interpreted as having meanings identical to those specified in the context of related technology. Unless definitely defined in the present application, the terms should not be interpreted as having ideal or excessively formative meanings.

A numerical range includes numerical values defined in the range. Every maximum numerical limitation given throughout the present specification includes every lower numerical limitation, as if such lower numerical limitations were expressly written herein. Every minimum numerical limitation given throughout the present specification will include every higher numerical limitation, as if such higher numerical limitations were expressly written herein. Every numerical range given throughout this specification will include every narrower numerical range that falls within such broader numerical range, as if such narrower numerical ranges were all expressly written herein.

Hereinafter, the present invention will be described in detail.

The present inventors have produced an epoxy resin by modifying a thermotropic liquid crystal molecule with a plurality of epoxy functional groups and additionally introducing imine (-C=N-) and ester (-COO-) functional groups, a cured product thereof, and a re-cured product thereof, and have found that these products have excellent recyclability and reprocessability, thereby completing the present invention.

The present invention provides a cured product of liquid-crystalline epoxy resin obtained by reacting a liquid-crystalline epoxy compound represented by Formula 1 below with a curing agent: 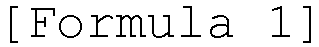 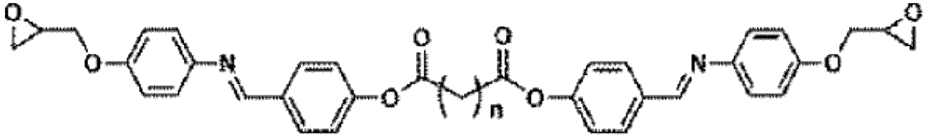 wherein n is an integer ranging from 1 to 30.

The compound may be a thermosetting resin monomer obtained by modifying a thermotropic liquid crystal molecule exhibiting a self-assembly phenomenon with a plurality of epoxy functional groups.

Preferably, the compound may be bis(4-(((4-(oxiran-2-ylmethoxy)phenyl)imino)methyl)phenyl)alkanedioate.

The compound may have imine (-C=N-) and ester (-COO-) functional groups introduced thereinto. The imine functional group is a functional group that is easily hydrolyzed and makes the epoxy resin recyclable, and the ester functional group is capable of transesterification with a hydroxyl group (-OH) derived from the epoxide generated after curing of the epoxy compound, thereby imparting reprocessability.

The curing agent may be any one or more selected from the group consisting of 4,4'-diaminodiphenylmethane (DDM), diaminodiphenylsulfone (DDS), m-phenylendiamine (mPDA), p-phenylendiamine (pPDA), hexamethylene diamine, oxydianiline, and dicyandiamide (DICY), and preferably may be 4,4'-diaminodiphenylmethane (DDM), without being limited thereto.

The compound and the curing agent may be reacted with each other at a molar ratio of 1: (0.1 to 1), preferably 1: 0.5, but without being limited thereto.

Preferably, the cured product according to the present invention may be represented by Formula 2 below: 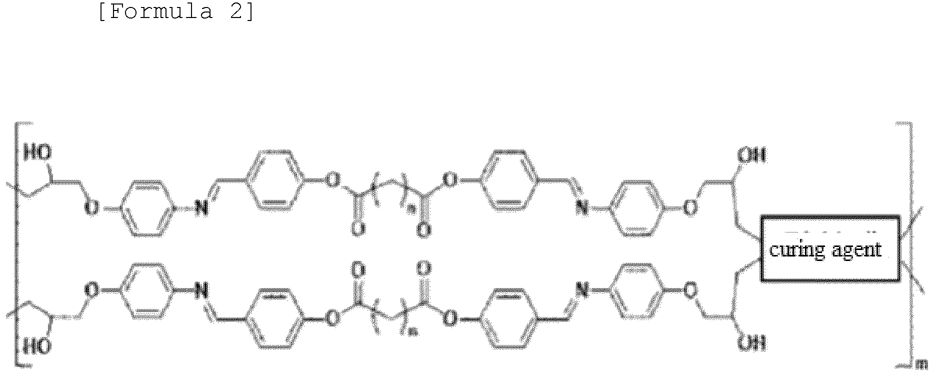 wherein n is an integer ranging from 1 to 30, and m may be infinite like a general polymer. Preferably, m may be an integer ranging from 1 to 100,000, without being limited thereto.

The cured product may have excellent thermal and mechanical properties, and in particular, may have a high thermal conductivity of 0.5 W/m·K or more.

The cured product may be recycled or reprocessed. That is, even after being crushed, broken, or chemically decomposed, the cured product may be re-cured or reprocessed into a product having similar properties.

The cured product may be chemically decomposed. Preferably, the cured product may be decomposed into compounds represented by Formulas 3-1 and 3-2 below under acidic or basic conditions and in a polar organic solvent, without being limited thereto: 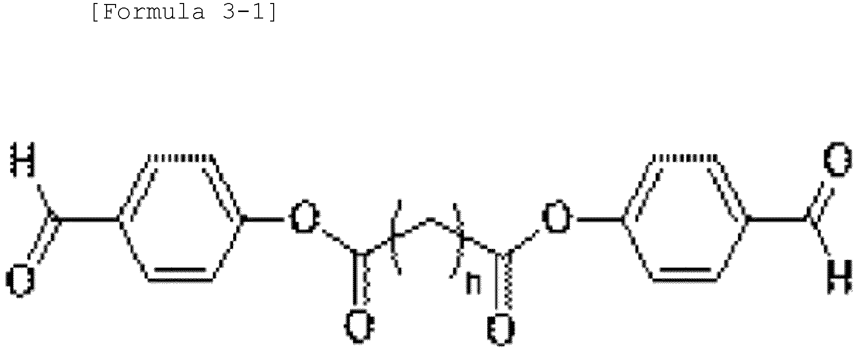 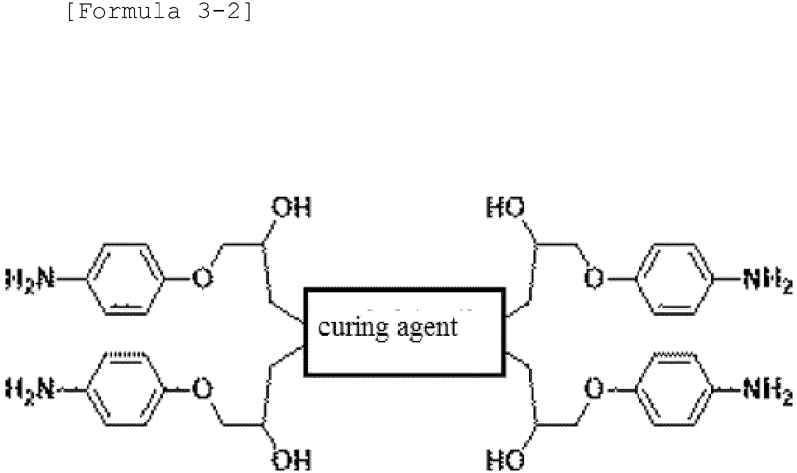 wherein n is an integer ranging from 1 to 30.

The acidic or basic conditions may be a pH of 4 or lower or a pH of 7 or higher, without being limited thereto.

The polar organic solvent may be selected from tetrahydrofuran (THF), dimethylformamide (DMF), dimethyl sulfoxide (DMSO), ethanol, methanol, or acetone, without being limited thereto.

The present invention provides a re-cured product of liquid-crystalline epoxy resin obtained by re-curing compounds prepared by chemical decomposition of the cured product of liquid crystalline epoxy resin.

Preferably, the re-cured product may be represented by Formula 4 below: 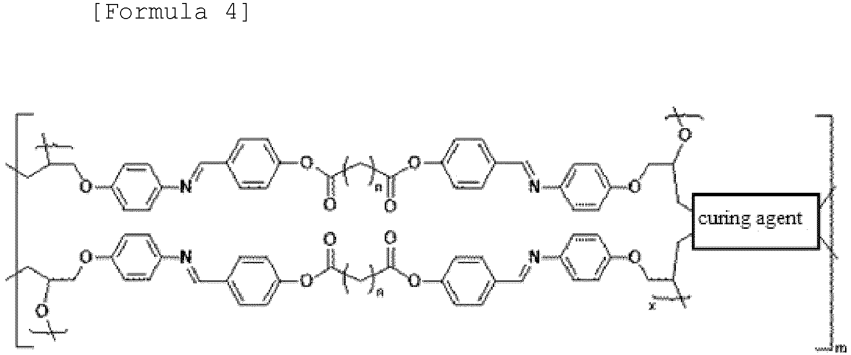 wherein n is an integer ranging from 1 to 30, and m may be infinite like a general polymer. Preferably, m may be an integer ranging from 1 to 100,000, without being limited thereto.

The re-cured product may have mechanical properties and thermal conductivity similar to those of the cured product of liquid-crystalline epoxy resin, or may have improved mechanical properties compared to the cured product.

The re-cured material may be recycled or reprocessed.

Due to these properties, the cured product of liquid-crystalline epoxy resin or the re-cured product of liquid-crystalline epoxy resin may be used as a vitrimer, Thus, the present invention provides a vitrimer composition comprising the cured product of liquid-crystalline epoxy resin or the re-cured product of liquid-crystalline epoxy resin.

The "vitrimer" refers to a polymer which is composed of a molecular covalent network capable of changing its topology by thermally activated bond-exchange reactions, and has both the chemical stability of a thermosetting polymer and the processability of a thermoplastic polymer.

The cured product of liquid-crystalline epoxy resin or the re-cured product of liquid-crystalline epoxy resin has excellent mechanical properties and thermal conductivity, and thus may be used as a thermally conductive polymer material.

The present invention also provides a method for producing a cured product of liquid-crystalline epoxy resin, comprising a step of mixing a liquid-crystalline epoxy compound and a curing agent, followed by heating under pressure.

The curing agent may be any one or more selected from the group consisting of 4,4'-diaminodiphenylmethane (DDM), diaminodiphenylsulfone (DDS), m-phenylendiamine (mPDA), p-phenylendiamine (pPDA), hexamethylene diamine, oxydianiline, and dicyandiamide (DICY), and preferably may be 4,4'-diaminodiphenylmethane (DDM), without being limited thereto.

The compound and the curing agent may be mixed with each other at a molar ratio of 1: (0.1 to 1), preferably 1: 0.5, without being limited thereto.

The heating may be performed at 120 to 140°C for 1 to 3 hours, preferably at 130°C for 1 to 2 hours, without being limited thereto.

The cured product of liquid-crystalline epoxy resin produced according to the above production method may be recycled or reprocessed while maintaining its excellent mechanical properties and thermal conductivity characteristics.

The present invention also provides a method for producing a re-cured product of liquid-crystalline epoxy resin, comprising a step of heating compounds, formed by chemical decomposition of the cured product of liquid-crystalline epoxy resin, under pressure.

The compounds prepared by chemical decomposition may be prepared by grinding before the heating under pressure, without being limited thereto.

The heating may be performed at 180 to 200°C for 1 to 3 hours, preferably at 190°C for 1 to 2 hours, without being limited thereto.

The re-cured product of liquid-crystalline epoxy resin produced according to the above production method may also be recycled or reprocessed while maintaining mechanical properties and thermal conductivity characteristics similar to those of the cured product.

More details will be described below by way of the following experimental examples.

Hereinafter, the present invention will be described in detail by way of examples to help understand the present invention. However, the following examples are only intended to illustrate the content of the present invention, and the scope of the present invention is not limited to the following examples. The examples of the present invention are provided to more completely explain the present invention to those of ordinary skill in the art.

### <Example 1> Synthesis of Epoxy Resin EP-n

Reaction Scheme 1 below shows a process for synthesis of epoxy resin EP-n.

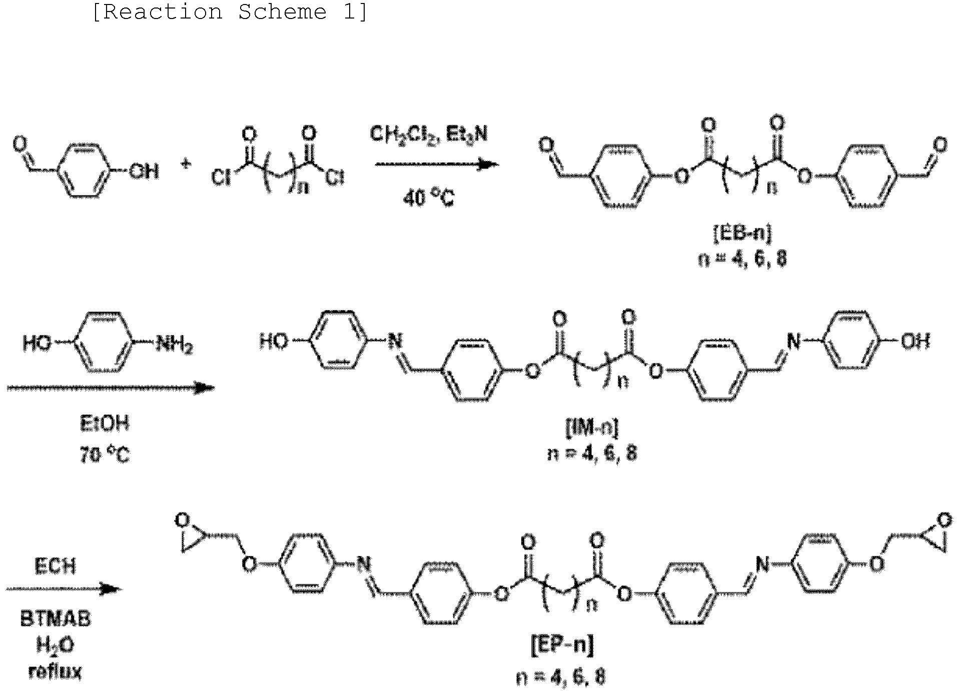

### 1-1. Synthesis of bis(4-formylphenyl)alkanedioate (EB-n)

4-hydroxybenzaldehyde (3.05 g, 25.0 mmol) was placed in a two-necked flask, and the atmosphere in the flask was replaced with argon. Then, triethylamine (3.5 ml) and anhydrous dichloromethane (CH₂Cl₂, 100 ml) were added thereto and the mixture was stirred until a homogeneous solution was formed. Thereafter, the reaction mixture was refluxed for 3 hours while 30 ml of anhydrous CH₂Cl₂ containing hexanedioyl dichloride (1.82 ml, 12.5 mmol) dissolved therein was added thereto dropwise. The resulting solution was extracted three times with a saturated sodium bicarbonate solution to remove impurities, and then concentrated and purified by silica column chromatography using a chloroform: ethyl acetate solution (11:1 volume ratio) as a developing solution to obtain EB-4 (3.69 g, 85% yield) .

¹H NMR (500 MHz, CDCl₃) : *δ* = 10.00 (s, 2H (CHO-Ar)), 7.92 (d, *J =* 8.6 Hz, 4ArH), 7.28 (d, *J* = 8.6 Hz, 4ArH), 2,69 (t, *J* = 7.4 Hz, 4H (-CO-CH₂-CH₂-)), 1.91 (q, *J*₁ = 3 Hz, *J*₂ = 4 Hz, 4H(-COCH₂-CH₂-)).

EB-6 and EB-8 were obtained by synthesis in the same manner as in Example 1-1, except that octanedioyl dichloride and decanedioyl dichloride were used, respectively, instead of hexanedioyl dichloride.

EB-6 (89% yield) : ¹H NMR (500 MHz, CDCl₃) : *δ* = 10 (s, 2H(CHO-Ar)), 7.92 (d, J = 8.6 Hz, 4ArH), 7.27 (d, J = 8.6 Hz, 4ArH), 2,62 (t, *J* = 7.4 Hz, 4H (-CO-CH₂-CH₂- CH₂), 1.80 (quintet, *J*₁ = 7.5 Hz, *J*₂ = 7.5 Hz, 4H(-COCH₂-CH₂- CH₂-)), 1.507 (quintet, *J*₁ = 4 Hz, *J*₂ = 4, 4H(-CO-CH₂-CH₂-CH₂-)).

EB-8 (86% yield) : ¹H NMR (500 MHz, CDCl₃) : *δ* = 10 (s, 2H (CHO-Ar)), 7.91 (d, *J* = 9 Hz, 4ArH), 7.27 (d, *J* = 8.6 Hz, 4ArH), 2,59 (t, *J* = 7.4 Hz, 4H(-CO-CH₂-CH₂-CH₂-CH₂-), 1.77 (quintet, *J*₁ = 7.5 Hz, *J*₂ = 7.5 Hz ,4H(-CO-CH₂-CH₂-CH₂-CH₂-)), 1.41-149(m, 8H(-CO-CH₂-CH₂-CH₂-CH₂-)), 1.36-1.44 (m, 8H(-CO-CH₂-CH₂-CH₂-CH₂-)

### 1-2. Synthesis of bis(4-(((4-hydroxyphenyl)imino)methyl)phenyl)alkanedioate (IM-n)

4-aminophenol (4.80 g, 44 mmol) was dissolved in 250 ml of absolute ethanol in a 1-liter 3-necked round bottom flask, and EB-4 (22 mmol) obtained in Example 1-1 and 250 ml of absolute ethanol were added to another 500-ml round bottom flask to obtain a homogeneous solution. After mixing the two solutions, the mixture was allowed to react under reflux for 30 minutes and cooled to room temperature. The obtained crystals were washed three times with cold ethanol to obtain IM-4 (10.9 g, 92% yield).

¹H NMR (500 MHz, DMSO-d₆) : *δ* = 9.52 (s, 2H (OH-Ar), 8.61 (s, 2H(Ar-CH=N-Ar)), 7.94 (d, *J* = 9 Hz, 4ArH), 7.27 (d, *J* = 8.6 Hz, 4ArH), 7.20 (d, *J* = 9 Hz, 4ArH), 6.80 (d, *J* = 8.6 Hz, 4ArH), 2.70 (t, *J* = 6 Hz, 4H(-CO-CH₂-CH₂-)), 1.74-1.82 (m, 4H (- CO-CH₂-CH₂-)).

IM-6 and IM-8 were obtained by synthesis in the same manner as in Example 1-2, except that EB-6 and EB-8 were used, respectively, instead of EB-4.

IM-6 (95% yield) : ¹H NMR (500 MHz, DMSO-d₆) : *δ* = 9.55 (s, 2H(OH-Ar), 8.61 (s, 2H(Ar-CH=N-Ar)), 7.94 (d, *J* = 9 Hz, 4ArH), 7.26 (d, *J =* 8.6 Hz, 4ArH), 7.20 (d, *J =* 8.6 Hz, 4ArH), 6. 80 (d, *J* = 9 Hz, 4ArH), 2.64 (t, *J =* 7.5 Hz, 4H(-CO-CH₂-CH₂-CH₂-)), 1.65-1.73 (m ,4H(-CO-CH₂-CH₂-CH₂-), 1.41-1.48 (m ,4H(-CO-CH₂-CH₂-CH₂-).

IM-8 (94% yield) : ¹H NMR (500 MHz, DMSO-d₆) : *δ* = 9.55 (s, 2H (OH-Ar), 8.61 (s, 2H(Ar-CH=N-Ar)), 7.93 (d, *J* = 9 Hz, 4ArH), 7.25 (d, *J =* 8.6 Hz, 4ArH), 7.20 (d, *J =* 8.6 Hz, 4ArH), 6.80 (d, *J* = 8.6 Hz, 4ArH), 2.61 (t, *J* = 7.5 Hz, 4H(-CO-CH₂-CH₂-CH₂-CH₂-)), 1.67 (quintet, *J*₁ = 7.3 Hz, *J*₂ = 7.3 Hz, 4H(-CO-CH₂-CH₂- CH₂-CH₂-)), 1.39-1.44 (m, 4H(-CO-CH₂-CH₂-CH₂-CH₂-)), 1.32-1.35 (m, 4H(-CO-CH₂-CH₂-CH₂-CH₂-)).

### 1-3. Synthesis of bis(4-(((4-(oxiran-2-ylmethoxy)phenyl)imino)methyl)phenyl)alkanedioate (EP-n)

IM-4 (4.02 g, 7.5 mmol) obtained in Example 1-3 and benzyltrimethylammonium bromide (0.4 g) were dissolved in anhydrous dimethylformamide (DMF, 40 ml), epichlorohydrin (55 ml) was added thereto, and the mixture was allowed to react at 90°C for 1 hour. After cooling to room temperature, the resulting solution was precipitated in 300 ml of methanol, and the formed white solid was filtered and recovered. The obtained solid was washed several times with methanol and distilled water to obtain EP-4 (the weight after drying was 2.04 g; 42% yield).

¹H NMR (500 MHz, CDCl₃): *δ (ppm)* = 8.38 (s, 2H(Ar-CH=N-Ar)), 7.84 (d, *J* = 8.6 Hz, 4ArH), 7.20 (d, *J* = 9.0 Hz, 4ArH), 7.10 (d, *J* = 9.0 Hz, 4ArH), 7.00 (d, *J* = 8.6 Hz, 4ArH), 4.31 (dd, *J*₁= 11.0 Hz, *J*₂ = 3.1 Hz, 2H), 4.02 (dd, *J*₁ = 11.0 Hz, *J*₂ = 5.8 Hz, 2H), 3.39 (ddt, *J*₁ = 5.8 Hz, *J*₂ = 4.1 Hz, *J*₃ = 2.9 Hz, 2H), 2.94 (dd, *J*₁ = 4.9 Hz, *J*₂ = 4.1 Hz, 2H), 2.79 (dd, *J*₁ = 4.9 Hz, *J*₂ = 2.6 Hz, 2H), 2.66 (q, *J*₁ = 6.1 Hz, *J*₂ = 4.2 Hz, 4H), 1.88-1.94 (m, 4H). ¹³C NMR (500 MHz, CDCl₃) : *δ (ppm)* : 171.86 (**C**=O), 161.11 (-**C**=N), 159.70 148.51, 121.73, 114.80 (-O-**Ar**-N=) 149.85, 130.56, 129.60, 122.12 (**Ar** O-), 68.82 (-**C**H₂-O), 49.96 (**C**H of oxirane ring), 44.61 (**C**H₂ of oxirane ring), 33.96 (-CO-**C**H₂-**C**H₂-), 24.29 (-CO-CH₂-**C**H₂-). MS (+ESI): calcd for [C₃₈H₃₆N₂O₈+2H]²⁺: *m*/*z* 650; found: *m*/*z* 650*.*

EP-6 and EP-8 were obtained by synthesizing in the same manner as in Example 1-3, except that IM-6 and IM-8 were used, respectively, instead of IM-4.

EP-6 (44% yield): ¹H NMR (500 MHz, CDCl₃: *δ (ppm)* = 8.37 (s, 2H(Ar-CH=N- Ar)), 7.84 (d, *J* = 9.0 Hz, 4ArH), 7.20 (d, *J* = 9.0 Hz, 4ArH), 7.09 (d, *J* = 9.0 Hz, 4ArH), 7.00 (d, *J =* 8.6 Hz, 4ArH), 4.31 (dd, *J*₁ = 11.0, *J*₂ = 3.0 Hz, 2H), 4.01 (dd, *J*₁ = 11.0 Hz, *J*₂ = 5.7 Hz, 2H), 3.39 (ddt, *J*₁ = 5.7 Hz, *J*₂ = 4.2 Hz, *J*₃ = 2.9 Hz, 1H), 2.93 (dd, *J*₁ = 4.9 Hz, *J*₂ = 4.1 Hz, 1H), 2.79 (dd, *J*₁ = 4.9 Hz, *J*₂ = 2.6 Hz, 1H), 2.59 (t, J = 7.4 Hz, 2H), 1.81 (dq, *J*₁ = 11.5 Hz, *J*₂ = 7.1 Hz, 2H), 1.51 (m, 4H) . ¹³C NMR (500 MHz, CDCl₃): *δ (ppm) :* 172.25 (**C**=O), 161.09 (-**C**=N), 159.69, 148.57, 121.71, 114.79 (-O-**Ar**-N=), 149.73, 130.55, 129.55, 122.13 (**Ar**O-), 68.80 (**-C**H₂-O), 49.95 (**C**H of oxirane ring), 44.58 (**C**H₂ of oxirane ring), 34.22 (-CO-**C**H₂-) , 28.68 (-CO-CH₂-**C**H₂-), 24.68 (-CO-CH₂-CH₂-**C**H₂-). MS (+ESI): calcd for [C₄₀H₄₀N₂O₈+2H]²⁺: *m*/*z* 678; found: *m*/*z* 678.

EP-8 (45% yield): ¹H NMR (500 MHz, CDCl₃) *δ (ppm)* = 8.37 (s, 2H(Ar-CH=N-Ar)) ,7.84 (d, *J* = 9.0 Hz, 4ArH), 7.19 (d, *J =* 9.0 Hz, 4ArH), 7.09 (d, *J =* 9.0 Hz, 4ArH), 7.00 (d, J = 8.6 Hz, 4ArH), 4.31 (dd, *J*₁ = 11.1 Hz, *J*₂ = 3.1 Hz, 2H), 4.02 (dd, *J*₁ = 11.0 Hz, *J*₂ = 5.7 Hz, 2H), 3.39 (ddt, *J*₁ = 5.8 Hz, *J*₂ = 4.2 Hz, *J*₃ = 2.8 Hz, 2H), 2.93 (dd, *J*₁ = 4.9 Hz, *J*₂ = 4.1 Hz, 2H), 2.79 (dd, *J*₁ = 4.9 Hz, *J*₂ = 2.6 Hz, 2H), 2.57 (t, *J =* 7.5 Hz, 4H), 1.77 (q, *J* = 7.4 Hz, 4H), 1.38-1.48 (m, 8H). ¹³C NMR (500 MHz, CDCl₃) : *δ (ppm)* : 172.36 (**C**=O), 161.08 (**-C**=N), 159.62, 148.60, 121.70, 114.79 (-O-**Ar**-N=), 149.74, 130.54, 129.59, 122.13 (**Ar**O-), 68.80 (**-C**H₂-O) , 49.95 (**C**H of oxirane ring),44.59 (**C**H₂ of oxirane ring), 34.33 (-CO-**C**H₂-), 29.03 (-CO-CH₂-**C**H₂-), 28.99 (-CO- CH₂-CH₂-**C**H₂-), 24.87 (-CO-CH₂-CH₂- CH₂-**C**H₂-). MS (+ESI): calcd for [C₄₂H₄₄N₂O₈+2H]²⁺: *m*/*z* 706; found: m/z 706.

EP-n is a liquid-crystalline epoxy resin with an enhanced interaction between liquid crystals due to a structural feature in which two liquid crystal molecules are connected to each other through an alkyl spacer at the center. Imine (-C=N-) and ester (-COO-) functional groups were introduced into the liquid crystal molecules to impart additional functionality. The imine functional group is a functional group that is easily hydrolyzed and makes the obtained epoxy resin recyclable, and the ester functional group is capable of transesterification with a hydroxyl group (-OH) derived from the epoxide generated after curing of the epoxy resin. Thus, despite being a thermosetting resin, the epoxy resin has the characteristics of a vitrimer that exhibits behavior similar to that of a reprocessable thermoplastic resin that can re-form a dynamic variable covalent bond.

### <Example 2> Production and Characterization of Epoxy Resin Cured Product (C-EP-n)

### 1. Production Method

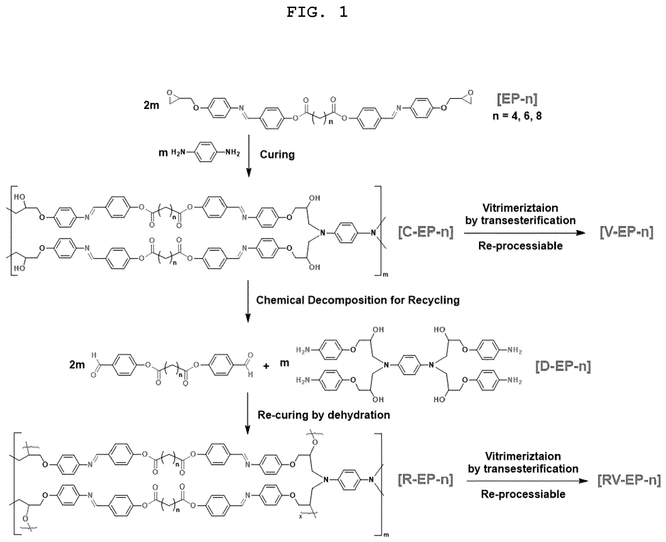

As shown in FIG. 1, the epoxy resin EP-n produced according to Example 1 and 4,4'-diaminodiphenylmethane (DDM) were mixed with each other at a molar ratio of 2:1 so that the epoxide and amine equivalents were the same. In order to optimize the curing conditions, detailed analysis of the curing reaction was performed using differential scanning calorimetry (DSC).

Table 1 below shows the results of analyzing the curing reaction of EP-n.

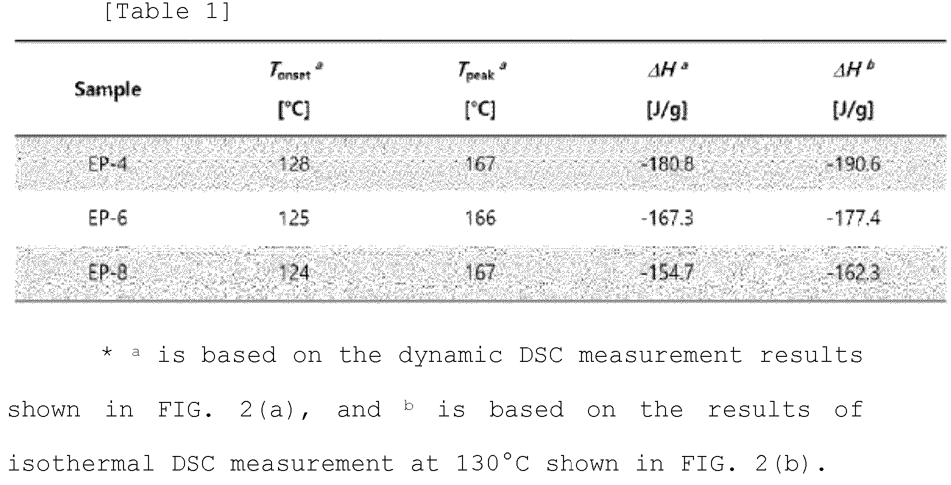

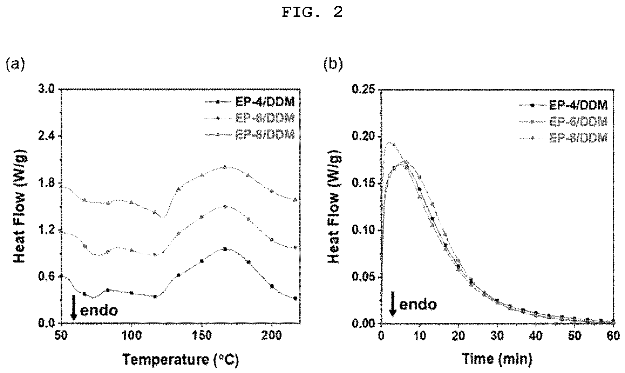

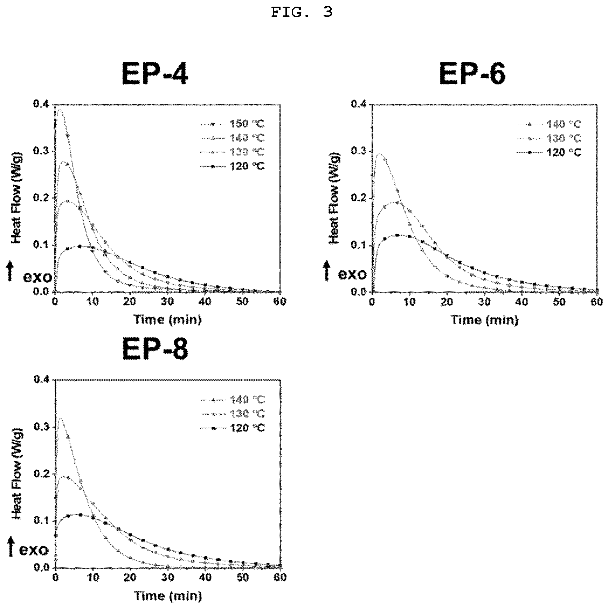

Referring to Table 1 above and FIGS. 2 and 3, it was confirmed that all of the three types of resins started to cure in the range of 124 to 128°C and showed a peak curing temperature at about 167 °C, suggesting that they all had similar polymerization functional groups in their molecular structures, and thus the influence of the alkyl spacer located far away from the functional groups was almost negligible. It was shown that the enthalpy change of the curing reaction was 154.7 to 180.8 J/g based on dynamic DSC and 162.3 to 190.6 J/g based on isothermal DSC at 130°C. In addition, EP-8, which has a high molecular weight, showed the lowest enthalpy change per gram, and EP-4, which has a low molecular weight, showed the highest enthalpy change per gram. It was found that the enthalpy change as the epoxy resin was within a general range and was sufficient for the formation of a cured network. In particular, it was found that the curing reaction at 130°C was completed in approximately 60 minutes, and there was no significant difference among the three types of resins. Accordingly, the optimal curing conditions were set to 130°C and 1 hour, and the production of cured products was performed under the set conditions.

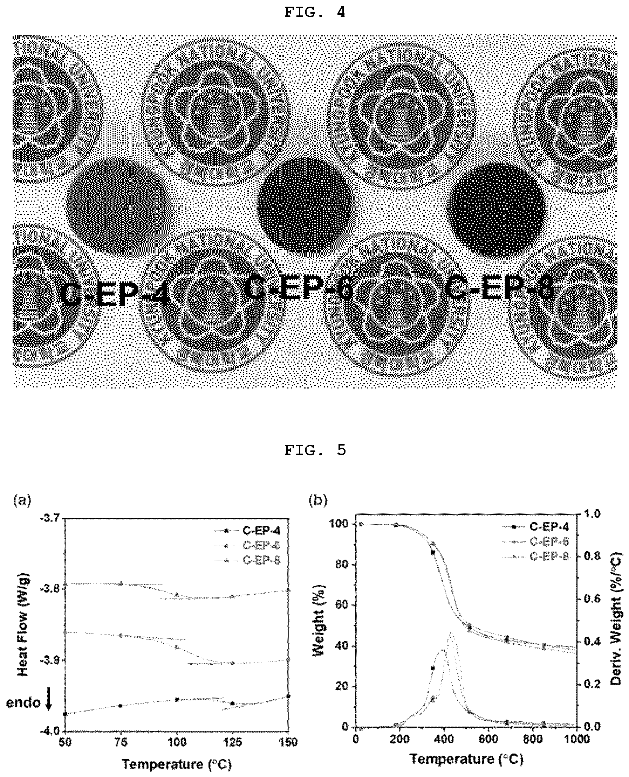

The preparation of cured product samples was carried out by pulverizing and mixing 10.0 g of EP-n and a corresponding functional group equivalent of DDM using a pulverizer, and then heating the obtained powder under pressure using a stainless steel mold. Two types of samples were prepared: circular (20 mm diameter and 5 mm thickness) and square (10 mm width, 40 mm length, and 3 mm thickness) (FIG. 4).

### 2. Characterization

The glass transition temperatures (T_{g}) of the cured products were measured using a differential scanning calorimeter (DSC) and a dynamic mechanical analyzer (DMA), the decomposition temperatures were measured using a thermogravimetric analyzer (TGA), and the thermal conductivity was measured using a thermal conductivity meter (TPS-3500S, Hot Disk).

Table 2 below shows the results of analyzing the physical properties of the cured products.

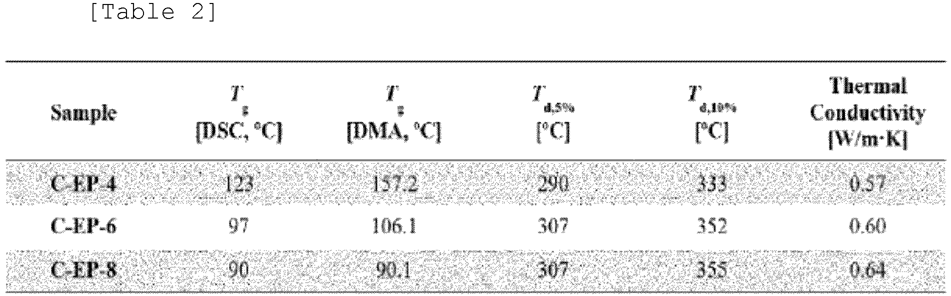

Referring to Table 2 above and FIG. 5, it was shown that the glass transition temperatures (T_{g}) of the cured products were in the range of 90 to 123°C, and tended to decrease as the chain length increased. The 5% weight decrease temperature (T_{d,5%}) was in the range of 290 to 307°C, and the 10% weight decrease temperature (T_{d,10}%) was in the range of 333 to 355 °C. These temperatures were not significantly different between the cured products, but increased somewhat as the chain length increased. It was confirmed that the thermal conductivity was in the range of 0.57 to 0.64 W/m·K and increased as the chain length increased, and C-EP-8 having the longest chain length had the highest thermal conductivity.

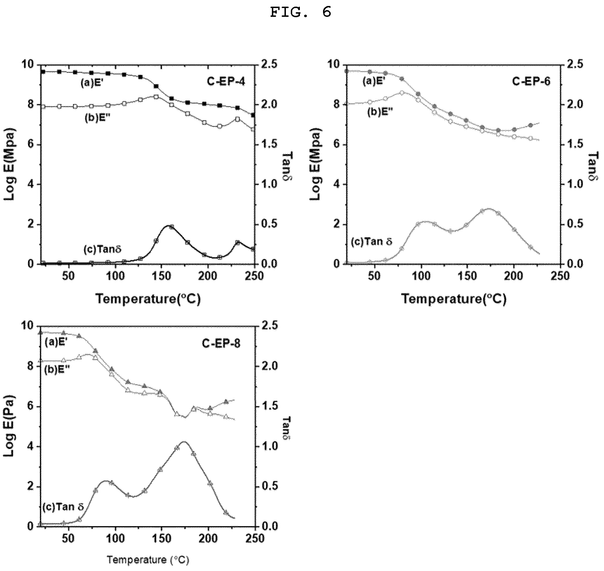

Referring to FIG. 6, which shows the results of dynamic mechanical analysis, it was confirmed that the storage modulus at a temperature below the glass transition temperature was 3 to 4 GPa in the entire temperature range below the glass transition temperature, and the loss modulus was 100 to 200 MPa, indicating that the mechanical properties were somewhat superior to those of general-purpose epoxy resins. Although unusual, two tan delta (δ) peaks were identified, in which the peak in the low-temperature region was determined to be the glass transition temperature, and the peak in the high-temperature region was inferred to be the isotropic transition point where the liquid crystal softens and vitrimerization through transesterification occurs.

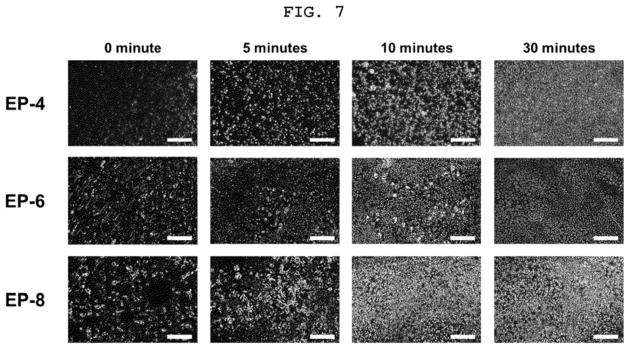

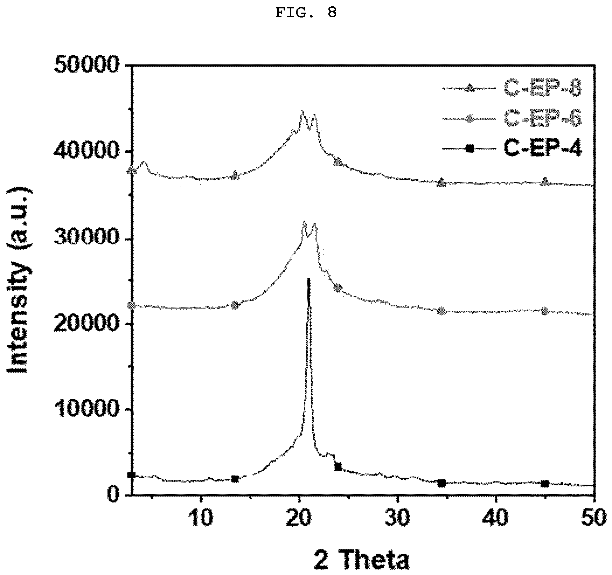

In addition, as a result of performing polarizing microscope observation to confirm the liquid crystal phase and self-assembled structure formed during the curing process, as shown in FIG. 7, it was confirmed that there were some differences depending on the spacer length, and that all of the cured products showed liquid crystal molecular orientation. In addition, as a result of investigating the microstructure through X-ray diffraction analysis, as shown in FIG. 8, the formation of a partial crystalline phase was clearly identified for C-EP-n, whereas a single peak derived from a completely amorphous phase is obtained for a general epoxy resin. From polarizing microscopy and XRD structural analysis, it is thought that the fact that an ordered microstructure could be developed is the reason for the high thermal conductivity.

### <Example 3> Production and Characterization of Reprocessed Product (V-EP-n) of Epoxy Resin Cured Product (C-EP-n)

### 1. Production Method

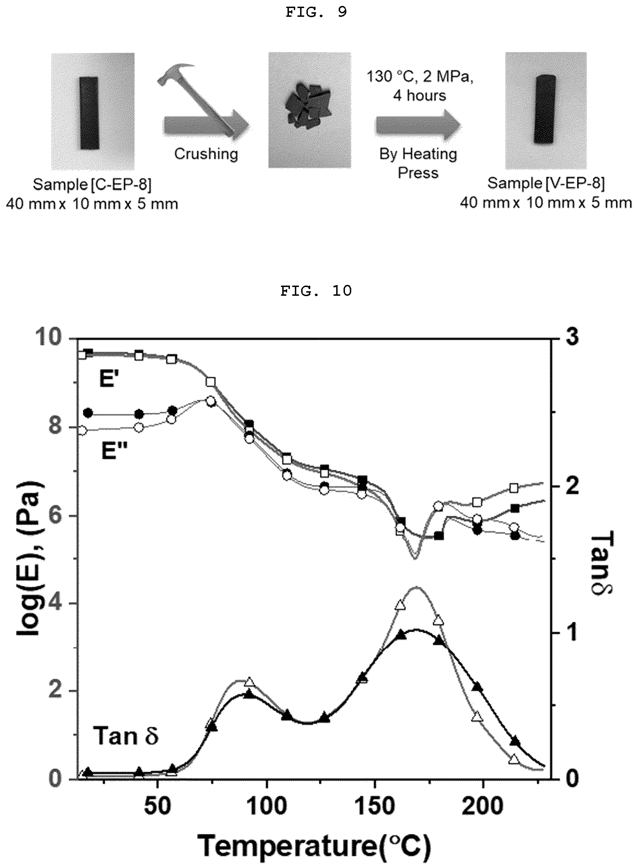

From the results of the dynamic mechanical analysis of C-EP-n, a rubbery plateau observed in a crosslinked polymer in a rubbery region above the glass transition temperature was clearly confirmed, and a softening phenomenon other than the glass transition phenomenon was confirmed, and it was determined that these were caused by intramolecular transesterification. Accordingly, a test was conducted to determine whether re-molding was possible through reheating after breaking the epoxy resin cured product (C-EP-n), and as shown in FIG. 9, it was confirmed that reprocessing was possible through the re-molding process. The chemical change that occurs at this time is that the remaining hydroxyl functional group of C-EP-n undergoes transesterification with the ester functional group. While a cured product of a general thermosetting resin cannot be reprocessed after being broken, it was confirmed that the cured product of epoxy resin according to this example can be used as a vitrimer (FIG. 1).

### 2. Characterization

As a result of analyzing the chemical structure of V-EP-n, which was produced by reprocessing broken C-EP-n, using FT-IR, it was confirmed that the chemical structure was almost identical to that of C-EP-n. As a result of measuring the glass transition temperature, decomposition temperature, and thermal conductivity, it was confirmed that all the characteristics had a slight change of about 1%, but were almost identical to those of C-EP-n. In addition, as a result of conducting DMA measurements to track changes in the mechanical properties, as shown in FIG. 10, it was confirmed that there was no significant change, indicating that the reprocessing process does not entail deterioration of physical properties and is repeatable.

### <Example 4> Chemical Decomposition of Epoxy Resin Cured Product (C-EP-n), and Production and Characterization of Decomposition Product (D-EP-n) Thereof

### 1. Chemical Decomposition and Method for Producing Decomposition Product Thereof

2.0 g of the epoxy resin cured product C-EP-n produced according to Example 2 and tetrahydrofuran (THF, 50 ml, 0.125 M HCl) were placed in a round flask equipped with a magnetic stirring system, and heated and stirred at 50°C for one hour until C-EP-n was completely dissolved. Next, the solvent was evaporated by distillation under reduced pressure, and then the solid was washed with water to remove residues and dried, thereby producing D-EP-n, a chemical decomposition product of C-EP-n. The yield was about 99% (FIG. 1). The decomposition process was possible under both acidic and alkaline conditions of similar concentration, and it could be confirmed that there was a difference in the rate of progress of the decomposition reaction due to a slight difference in solubility depending on the solvent.

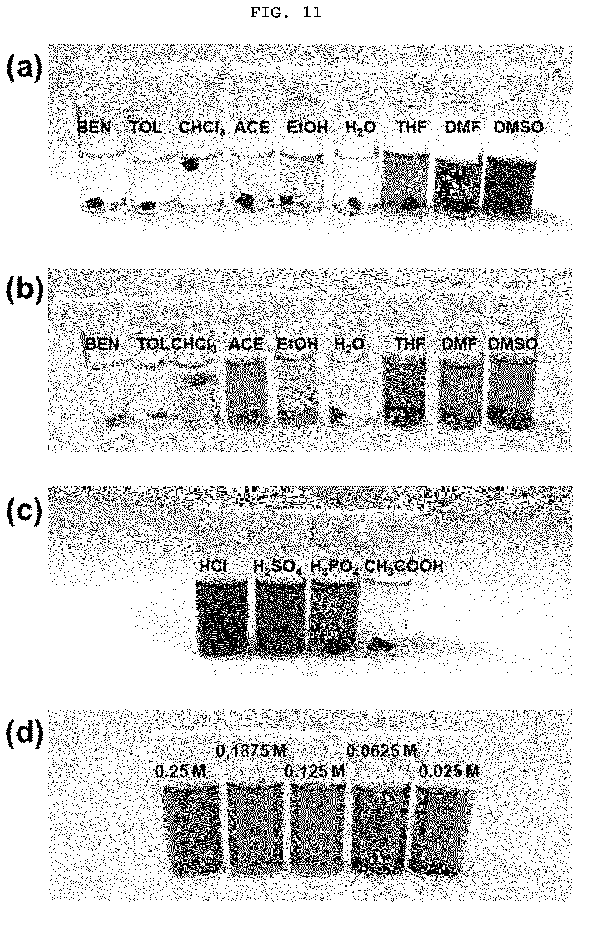

Referring to FIG. 11, it could be confirmed that trace dissolution occurred in some polar solvents among the organic solvent conditions in a neutral state, but the epoxy resin cured product was very stable in water. Depending on the degree of dissociation of the acid used, decomposition occurred quickly under strong acid conditions, and decomposition occurred under polar organic solvent conditions under the same acidic conditions, but decomposition did not occur under non-polar solvent conditions. In addition, it could be confirmed that decomposition was possible under all conditions of different HCl concentrations in the same THF solvent, although there was a difference in the decomposition rate.

### 2. Characterization

The chemical structure of the decomposed product D-EP-n was analyzed using nuclear magnetic resonance (¹H-NMR, AVANCE III 500, Bruker) and infrared spectroscopy (FT-IR, JASCO FT/IR-4100).

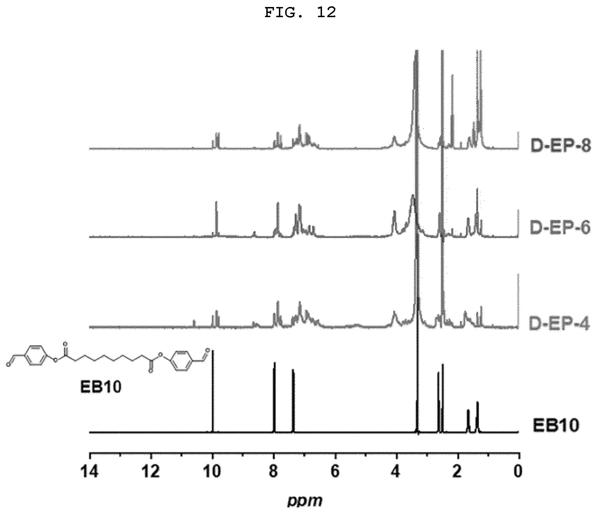

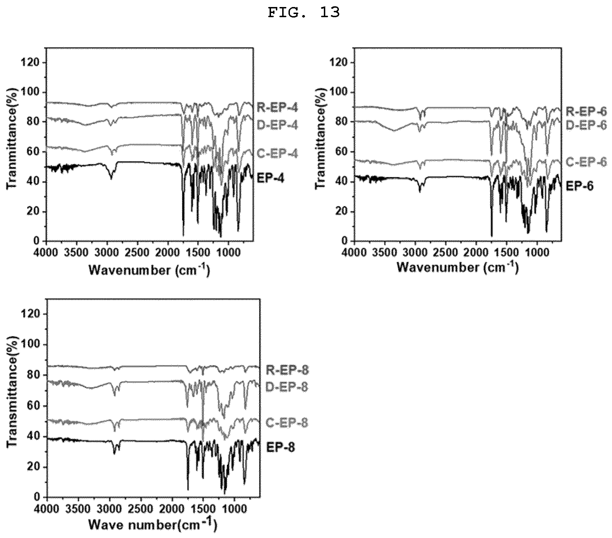

Referring to FIGS. 12 and 13, the structure of D-EP-n is expected to be composed of an aldehyde and an amine obtained by the decomposition of an imine. Through comparison of the ¹H-NMR results with those of the aldehyde EB-10, which is a synthetic precursor of EP-n, the production of D-EP-n with the same structure and a similar structure was confirmed. In addition, through FT-IR analysis, it was confirmed that compounds corresponding to the expected structure of D-EP-n were clearly formed through the chemical decomposition of C-EP-n.

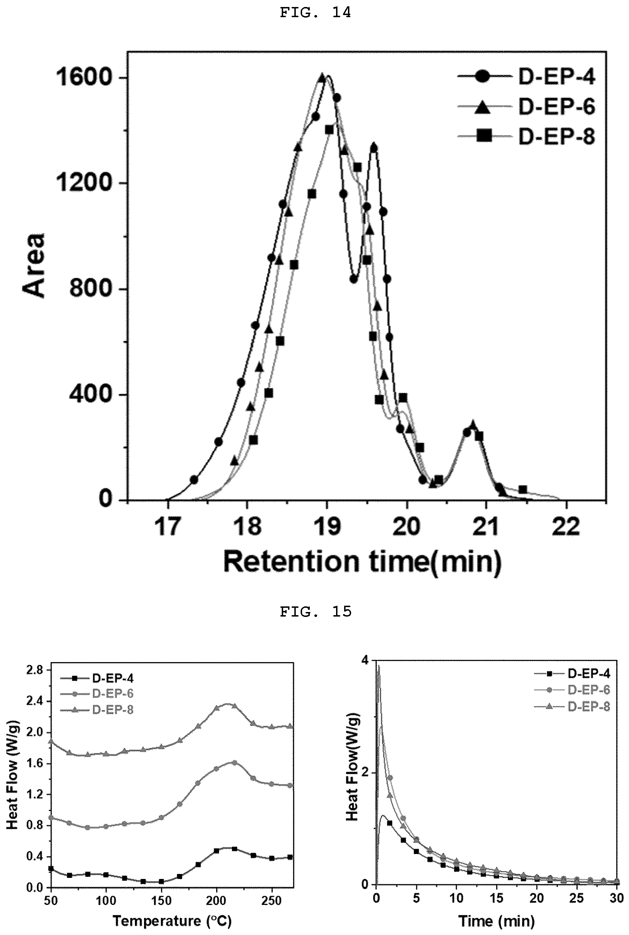

In addition, as shown in FIG. 14 and Table 3 below, it was confirmed through gel permeation chromatography (GPC, AS-4050, Jasco) measurement that C-EP-n was decomposed into D-EP-n, a mixture of an oligomeric aldehyde and an oligomeric amine.

Table 3 below shows the results of analyzing the molecular weight of D-EP-n by GPC measurement.

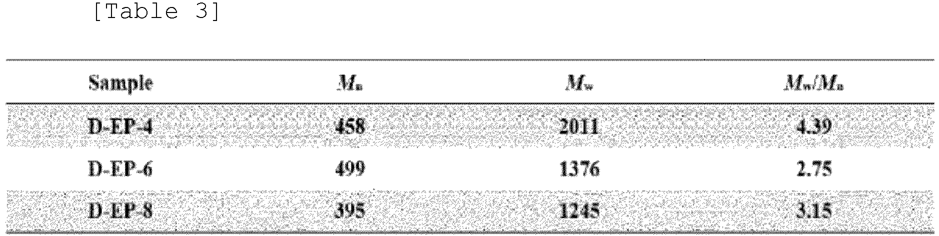

### <Example 5> Production of Re-Cured Product (R-EP-n) by Condensation Curing Reaction of Chemical Decomposition Product (D-EP-n) and Characterization Thereof

### 1. Production Method

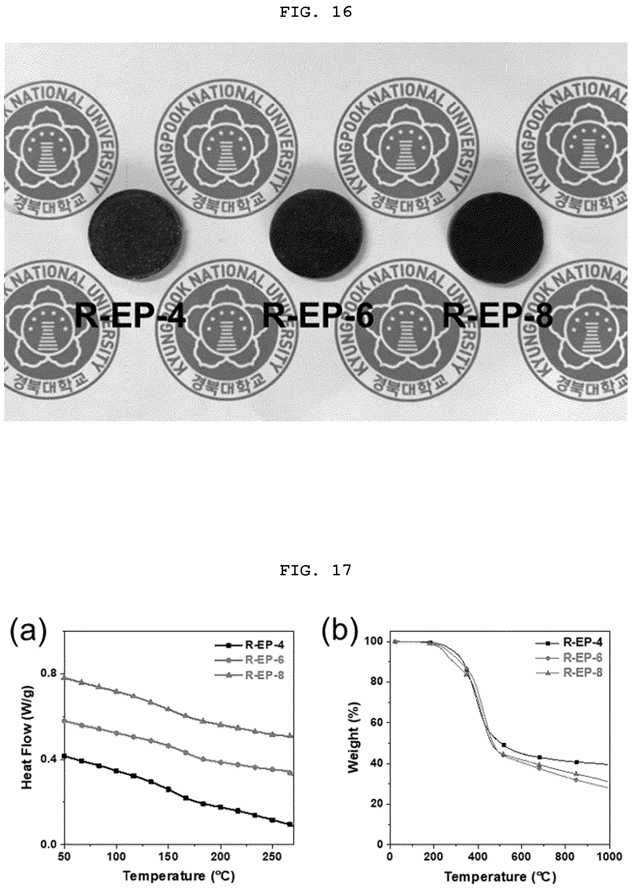

The imine reformation reaction by dehydration between aldehyde and amine of the chemical decomposition product D-EP-n and the crosslinking reaction by dehydration of hydroxyl groups were traced through differential scanning calorimetry (DSC, DSC4000, PerkinElmer) as shown in FIG. 15 and Table 4 below. It was confirmed that the exothermic reaction started at approximately 150°C and was completed at 250°C or lower, and it was confirmed from the isothermal curve measured at 190°C that a sufficient exothermic reaction could be completed within 30 minutes. Based on the above-described re-curing conditions, as shown in FIG. 1, R-EP-n could be produced by placing powder-shaped D-EP-n into a stainless steel mold and heating the same at 190°C for 1 hour using a heating press (FIG. 16).

Table 4 below shows the results of analyzing the re-curing reaction of the chemical decomposition product D-EP-n by differential scanning calorimetry.

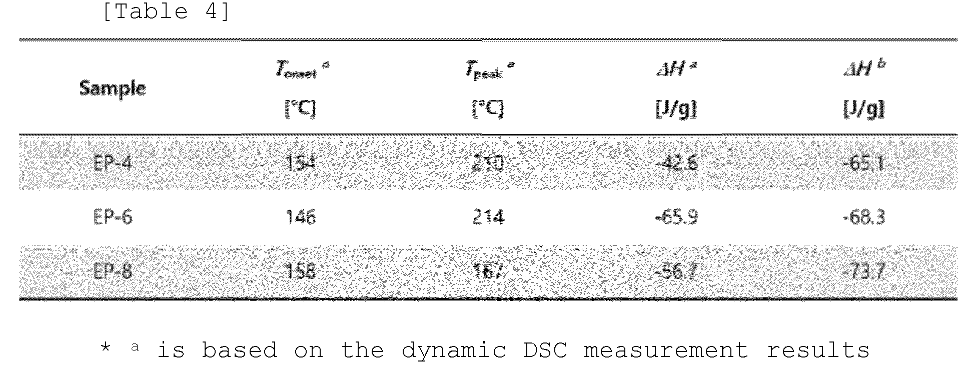

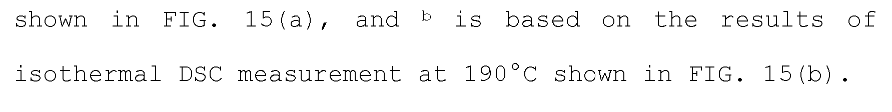

### 2. Characterization

The properties of R-EP-n, a re-cured product of D-EP-n, were analyzed as follows. The glass transition temperature was analyzed by differential scanning calorimetry (DSC, DSC4000, PerkinElmer), the decomposition temperature was analyzed by a thermogravimetric analyzer (TGA, Q500, TA Instruments) and a dynamic mechanical analyzer (DMA, DMA850, TA Instruments), and the thermal conductivity was analyzed by a thermal conductivity meter (TPS 3500S, Hot Disk).

Table 5 below shows the results of analyzing the properties of the re-cured products.

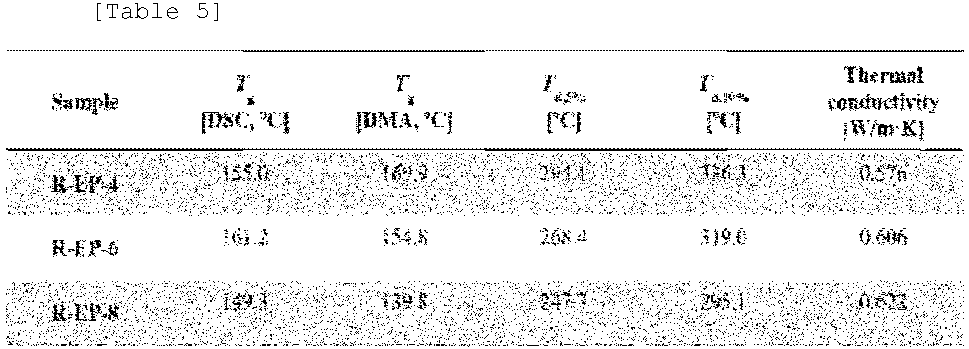

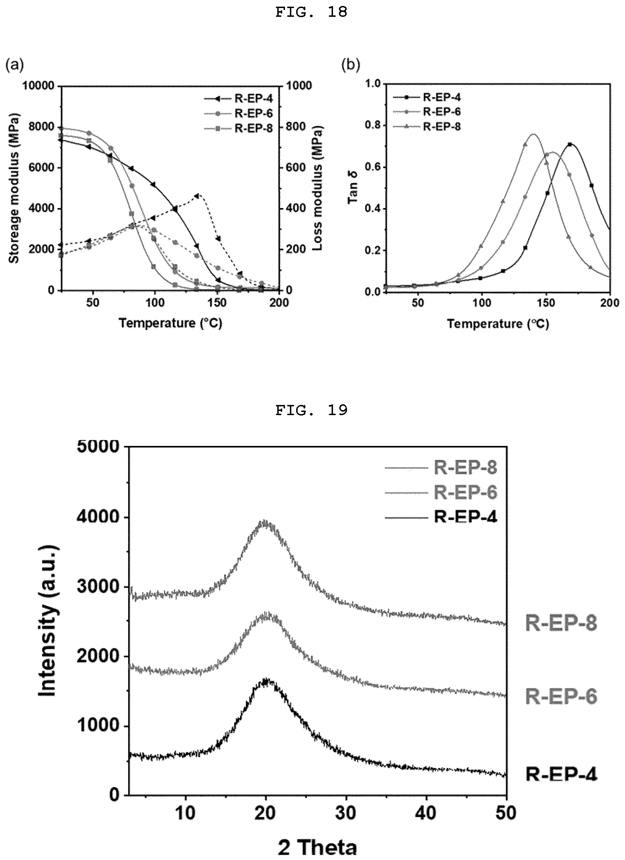

Referring to Table 5 above and FIGS. 17 and 18, the glass transition temperature of R-EP-n measured by differential scanning calorimetry was in the range of 155 to 161°C, and the glass transition temperature of R-EP-n measured by dynamic mechanical analysis was in the range of about 139 to 170 °C, and the glass transition temperature tended to decrease as the chain length increased. In particular, it was confirmed that the crosslinking density of the obtained cured product resulting from the formation of imines by dehydration and the crosslinking reaction of hydroxyl groups during the re-curing process significantly increased, and accordingly, the glass transition temperature increased and the elastic modulus significantly increased compared to that of C-EP-n.

As a result of thermogravimetric analysis, the 5% weight decrease temperature was in the range of 247 to 294°C, and the 10% weight decrease temperature was in the range of 295 to 336°C, and these weight decrease temperatures tended to decrease as the chain length increased. It was confirmed that the thermal conductivity was in the range of 0.58 to 0.62 W/m·K, and increased as the chain length increased, and the thermal conductivity of R-EP-8, which had the longest chain length, was the highest.

However, the thermal conductivity was slightly lower than that of C-EP-n, and as a result of analyzing the microstructure by XRD analysis (EMPYREAN, Malvern Panalytical), as shown in FIG. 19, this decrease in the thermal conductivity is believed to be due to the development of an amorphous structure by an additional cross-linking reaction.

### <Example 6> Production of Reprocessed Product (RV-EP-n) by Reprocessing of Re-Cured Product (R-EP-n) and Characterization Thereof

### 1. Production Method

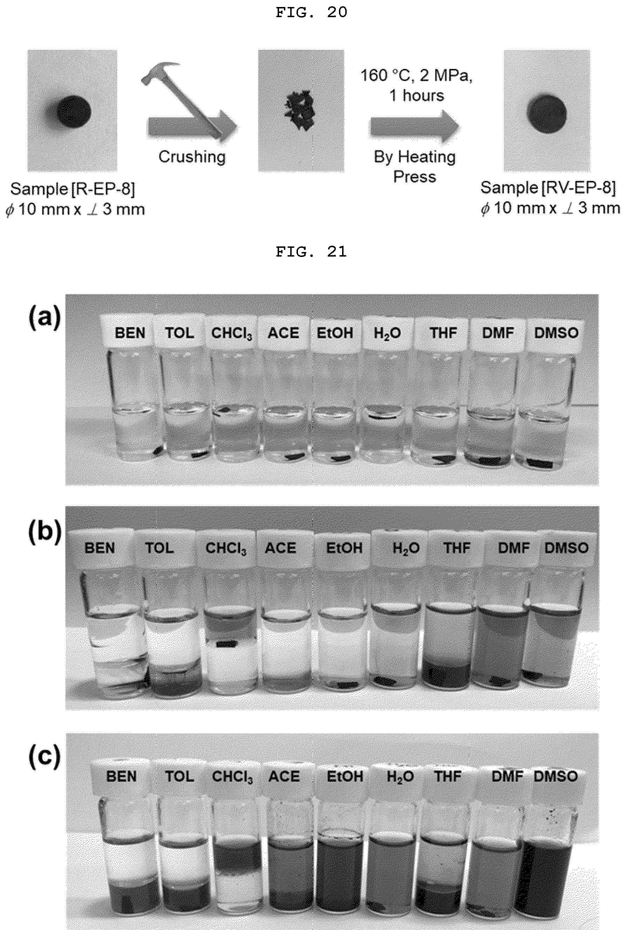

From the results of dynamic mechanical analysis of R-EP-n, a rubbery plateau with high elastic modulus was clearly identified based on the crosslinking density that increased due to dehydration of hydroxyl groups in the rubbery region above the glass transition temperature compared to C-EP-n. Although no softening point was observed at a temperature higher than the glass transition temperature because the crosslinking density was greatly increased compared to that of C-EP-n, it was determined that intramolecular transesterification between the remaining hydroxyl groups and esters in the chemical structure was still possible. Accordingly, a test was conducted to determine whether remolding was possible through reheating after breaking the epoxy resin cured product R-EP-n, and as shown in FIG. 20, it could be confirmed that reprocessing was possible like a thermoplastic resin through a remolding process at a temperature equal to or higher than the glass transition temperature (FIG. 1). It was confirmed that RV-EP-n, a reprocessed product of the re-cured product R-EP-n, showed no difference in properties from R-EP-n, and may be used as a vitrimer despite being a material with a very high crosslinking density.

### 2. Characterization - Repeated Recyclability

In the same manner as the production of D-EP-n, REP-n was also completely dissolved in an organic solvent under acidic or basic conditions, and the solvent was removed by distillation under reduced pressure. The obtained solid was washed with water to remove the residue was removed, thereby producing R-EP-n.

Due to the increased crosslinking density, repeated recycling tended to take more time under the same conditions, but as shown in FIG. 21, it was could be confirmed that the re-cured product of the recycled product was also capable of repeated recycling.

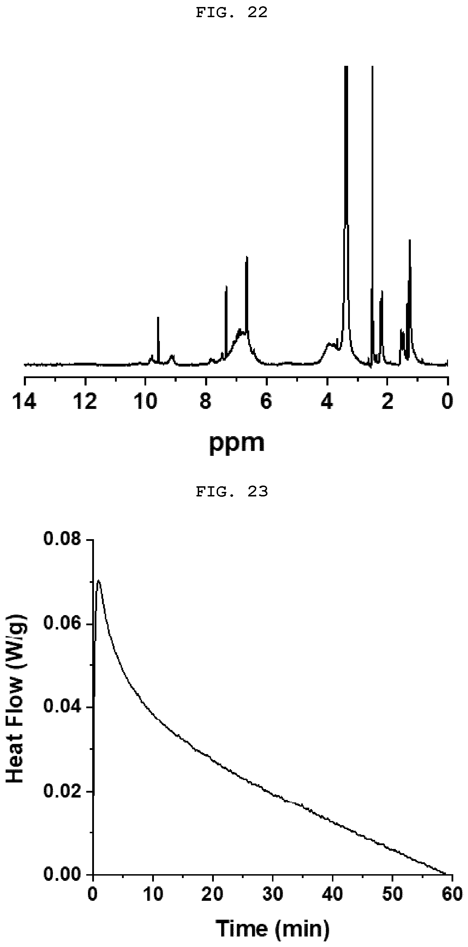

Referring to FIG. 22, the NMR spectrum of D-EP-8, a decomposition product produced from R-EP-8, shows a clear aldehyde peak at 9 to 10 ppm, as well as a chemical structure similar to that of D-EP-n produced from C-EP-n, indicating that the decomposition reaction occurred as intended.

Referring to FIG. 23, it was confirmed that D-EP-n produced through repeated recycling as described above also exhibited an exothermic reaction of about 70 J/g, which is a value similar to that of the first recycling, at a temperature of 150°C or higher, and it could be confirmed that recycling of D-EP-n was possible because the re-curing reaction was repeatable through dehydration between aldehyde amines and dehydration between hydroxyls.

So far, the present invention has been described with reference to the specific embodiments. Those skilled in the art will appreciate that the present invention can be embodied in modified forms without departing from the essential features of the present invention. Therefore, the disclosed embodiments should be considered in descriptive sense only and not for purposes of limitation. The scope of the present invention is defined by the claims rather than the foregoing description, and all differences within the scope equivalent thereto should be construed as being included in the present invention.

## Claims

1. A cured product of liquid-crystalline epoxy resin obtained by reacting a liquid-crystalline epoxy compound represented by Formula 1 below with a curing agent: 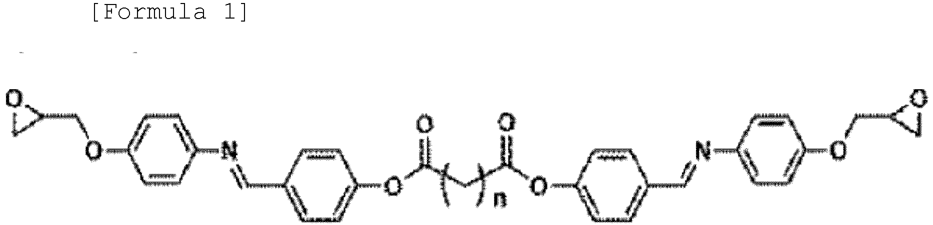 wherein n is an integer ranging from 1 to 30.

2. The cured product of liquid-crystalline epoxy resin according to claim 1, wherein the cured product is represented by Formula 2 below: 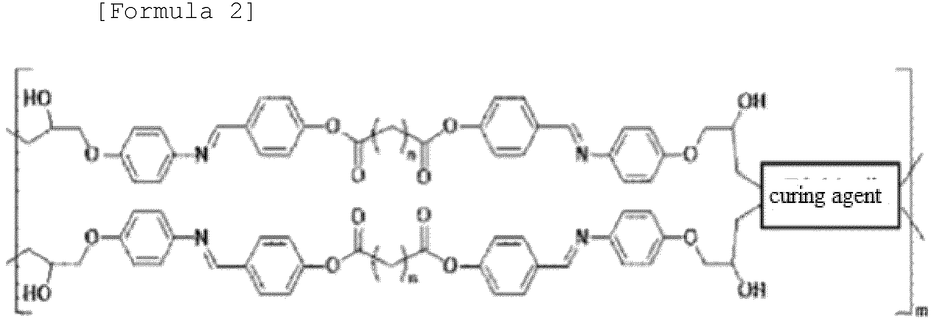 wherein n is an integer ranging from 1 to 30, and m is an integer ranging from to 100,000.

3. The cured product of liquid-crystalline epoxy resin according to claim 1, wherein the curing agent is any one or more selected from the group consisting of 4,4'-diaminodiphenylmethane (DDM), diaminodiphenylsulfone (DDS), m- phenylendiamine (mPDA), p-phenylendiamine (pPDA), hexamethylene diamine, oxydianiline, and dicyandiamide (DICY).

4. The cured product of liquid-crystalline epoxy resin according to claim 1, wherein the compound and the curing agent are reacted with each other at a molar ratio of 1: (0.1 to 1).

5. The cured product of liquid-crystalline epoxy resin according to claim 1, wherein the cured product have a thermal conductivity of 0.5 W/m·K or higher.

6. The cured product of liquid-crystalline epoxy resin according to claim 1, wherein the cured product is recyclable or reprocessable.

7. The cured product of liquid-crystalline epoxy resin according to claim 1, wherein the cured product is chemically decomposed under acidic or basic conditions and in a polar organic solvent.

8. The cured product of liquid-crystalline epoxy resin according to claim 1, wherein the cured product is decomposed into compounds represented by Formulas 3-1 and 3-2 below: 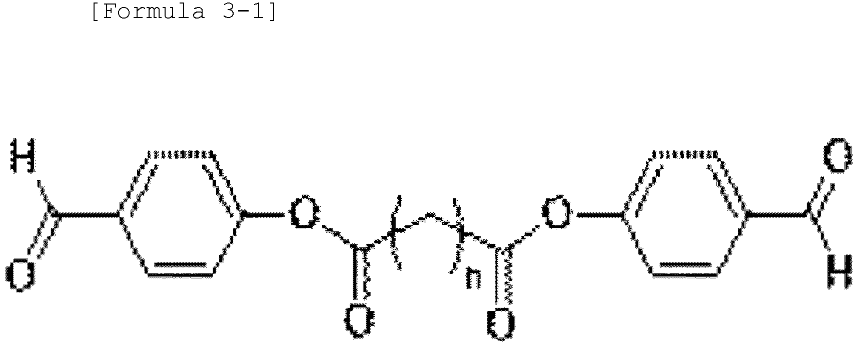 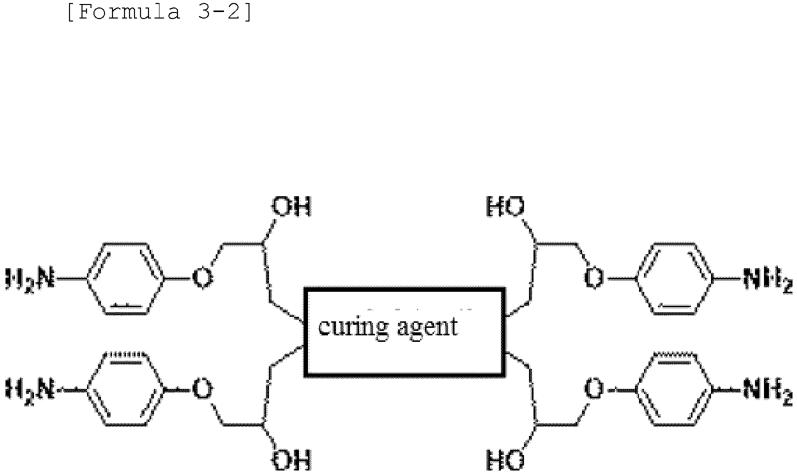 wherein n is an integer ranging from 1 to 30.

9. A re-cured product of liquid-crystalline epoxy resin obtained by re-curing compounds formed by chemical decomposition of the cured product of liquid crystalline epoxy resin according to claim 8.

10. The re-cured product of liquid-crystalline epoxy resin according to claim 9, wherein the re-cured product is represented by Formula 4 below: 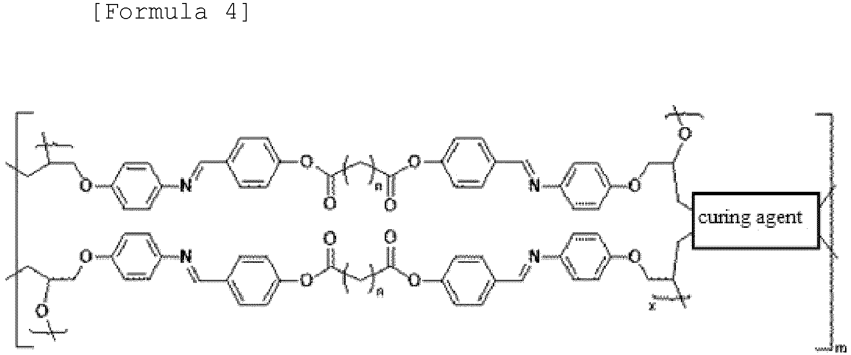 wherein n is an integer ranging from 1 to 30, and m is an integer ranging from 1 to 100,000.

11. The re-cured product of liquid-crystalline epoxy resin according to claim 9, wherein the re-cured product has improved physical properties compared to the cured product of liquid crystalline epoxy resin.

12. The re-cured product of liquid-crystalline epoxy resin according to claim 9, wherein the re-cured product is recyclable or reprocessable.

13. A vitrimer composition comprising the cured product of liquid-crystalline epoxy resin according to any one of claims 1 to 8 or the re-cured product of liquid-crystalline epoxy resin according to any one of claims 9 to 12.

14. A method for producing a cured product of liquid-crystalline epoxy resin, comprising a step of mixing a liquid-crystalline epoxy compound according to claim 1 and a curing agent, followed by heating under pressure.

15. The method for producing a cured product of liquid-crystalline epoxy resin according to claim 14, wherein the curing agent is any one or more selected from the group consisting of 4,4'-diaminodiphenylmethane (DDM), diaminodiphenylsulfone (DDS), m- phenylendiamine (mPDA), p-phenylendiamine (pPDA), hexamethylene diamine, oxydianiline, and dicyandiamide (DICY).

16. The method for producing a cured product of liquid-crystalline epoxy resin according to claim 14, wherein the compound and the curing agent are mixed with each other at a molar ratio of 1: (0.1 to 1).

17. The method for producing a cured product of liquid-crystalline epoxy resin according to claim 14, wherein the heating is performed at 120 to 140°C for 1 to 3 hours.

18. A method for producing a re-cured product of liquid-crystalline epoxy resin, comprising a step of heating compounds, formed by chemical decomposition of the cured product of liquid-crystalline epoxy resin according to claim 8, under pressure.

19. The method for producing a re-cured product of liquid-crystalline epoxy resin according to claim 18, wherein the compounds formed by chemical decomposition are prepared by grinding before the heating under pressure.

20. The method for producing a re-cured product of liquid-crystalline epoxy resin according to claim 18, wherein the heating is performed at 180 to 200°C for 1 to 3 hours.
